# EUROPÄISCHE PATENTSCHRIFT

(11) **EP 1 410 576 B1**
(45) Veröffentlichungstag und Bekanntmachung des Hinweises auf die Patenterteilung: **31.10.2007**
(21) Anmeldenummer: 01900435.7
(22) Anmeldetag: 12.01.2001
(51) Int. Cl.: H04L 12/437, H04Q 11/04

(54) **VERFAHREN ZUM ERSATZSCHALTEN VON ÜBERTRAGUNGSEINRICHTUNGEN IN MPLS-PAKETE FÜHRENDE RINGARCHITEKTUREN**
METHOD FOR PROVIDING AN EQUIVALENT CIRCUIT FOR TRANSMISSION DEVICES IN RING ARCHITECTURES THAT ROUTE MPLS PACKETS
PROCEDE DE COMMUTATION DE REMPLACEMENT DE DISPOSITIFS DE TRANSMISSION DANS DES ARCHITECTURES EN BOUCLE UTILISANT LES PAQUETS A COMMUTATION PAR ETIQUETTE MULTIPROTOCOLE (MPLS)

(30) Priorität: 29.02.2000 EP 00104146
(43) Veröffentlichungstag der Anmeldung: 21.04.2004
(73) Patentinhaber: NOKIA SIEMENS NETWORKS GMBH & CO. KG, 81541 München (DE)
(72) Erfinder: KLINK, Joachim, 81377 München (DE)
(86) Internationale Anmeldenummer: PCT/EP2001/000338
(87) Internationale Veröffentlichungsnummer: WO 2001/065775

(56) Entgegenhaltungen:
- EP-A- 0 857 002
- EP-A- 0 857 003
- SUN H ET AL: "Supporting IP on the ATM networks: an overview" COMPUTER COMMUNICATIONS,NL,ELSEVIER SCIENCE PUBLISHERS BV, AMSTERDAM, Bd. 21, Nr. 11, 10. August 1998 (1998-08-10), Seiten 1020-1029, XP004138773 ISSN: 0140-3664

## Beschreibung

Die Erfindung betrifft ein Verfahren gemäß dem Oberbegriff des Patentanspruch 1.

Ein Verfahren zum Ersatzschalten von Übertragungseinrichtungen in Ringarchitekturen ist bereits aus der deutschen Patentanmeldung DE 197 039 92.8 bekannt.

Dieses bekannte Verfahren bezieht sich auf Übertragungseinrichtungen, über die Informationen nach einem asynchronen Transfermodus (ATM) geleitet werden. Hierbei ist sind Ubertragungseinrichtungen zur bidirektionalen Übertragung von Informationen vorgesehen, bei der zwei als Endstellen fungierende Vermittlungseinrichtungen über eine Mehrzahl von Betriebsstrecken und eine Ersatzstrecke miteinander verbunden sind. Die beiden Endstellen enthalten jeweils Überwachungsvorrichtungen zur Feststellung von Übertragungsstörungen. Eine durch eine Überwachungsvorrichtung steuerbare Schaltvorrichtung verbindet eine Empfangsvorrichtung in einem ersten Schaltzustand mit der Betriebsstrecke und in einem zweiten Schaltzustand mit der Ersatzstrecke.

Nachteilig an diesem bekannten Verfahren ist, daß sie sich ausschließlich auf ATM-Übertragungseinrichtungen bezieht. Im Internet werden Informationen über eine Mehrzahl von Netzknoten, die als Router ausgebildet sein können, dem empfangenden Teilnehmer zugeführt. Zwischen den Routern können MPLS-Netze angeordnet sein. MPLS-Netze sind aber in dem bekannten Verfahren überhaupt nicht angeprochen.

Der Erfindung liegt die Aufgabe zugrunde, ein Verfahren der eingangs genannten Art derart weiterzubilden, daß Informationen, die nach einem Internetprotokoll übertragen werden, mit großer Sicherheit über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß eine Mehrzahl von Ersatzstrecken sich eine gemeinsam reservierte Übertragungskapazität teilen.

Vorteilhafte Weiterbildungen der Erfindung sind in den Unteransprüchen anggegeben.

Die Erfindung wird im folgenden anhand eines Ausführungsbeispiels näher erläutert.

Es zeigen:
- Figur 1: ein in das Internet eingebundenes MPLS-Netz,
- Figur 2: Eine Konfiguration zur bidirektionalen Übertragung von ATM-Zellen in einer linearen 1:1-Struktur,
- Figur 3: eine ringförmige Konfiguration, auf der das erfindungsgemäße Verfahrens zum Ablauf gelangt,
- Figur 4: das erfindungsgemäße Verfahren im Falle eines einfachen Fehlers,
- Figur 5: das erfindungsgemäße Verfahren im Falle eines Doppelfehlers,

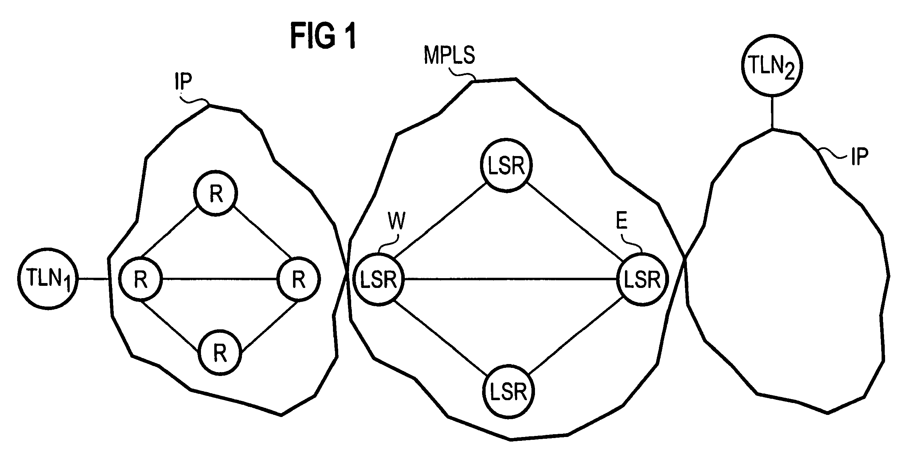

In Fig. 1 ist beispielhaft aufgezeigt, wie Informationen ausgehend von einem Teilnehmer TLN1 einem Teilnehmer TLN2 zugeführt werden. Der sendende Teilnehmer TLN1 ist dabei an das Internet-Netz IP angeschlossen, durch das die Informationen nach einem Internetprotokoll wie z.B. das IP-Protokoll geleitet werden. Dieses Protokoll ist kein verbindungsorientiertes Protokoll. Das Internet-Netz IP weist eine Mehrzahl von Routern R auf, die untereinander vermascht sein können. Der empfangende Teilnehmer TLN2 ist an ein weiteres Internet-Netz IP angeschlossen. Zwischen den beiden Internet-Netzen IP ist ein MPLS-Netz (Multiprotocol Packet Label Switching) eingefügt, durch das Informationen in Form von MPLS-Paketen verbindungsorientiert durchgeschaltet werden. Dieses Netz weist eine Mehrzahl von miteinander vermaschten Routern auf. In einem MPLS-Netz können dies sogenannte Label Switched Router (LSR) sein. Einer der Router ist als sendende Einrichtung W und ein weiterer als empfangende Einrichtung E bezeichnet.

MPLS-Pakete weisen jeweils einen Kopfteil (Paketkopf) sowie einen Informationsteil auf. Der Kopfteil dient der Aufnahme von Verbindungsinformation während der Informationsteil der Aufnahme von Nutzinformation dienlich ist. Als Nutzinformation werden IP-Pakete verwendet. Die im Kopfteil enthaltene Verbindungsinformation ist als MPLS-Verbindungsnummer ausgebildet. Diese hat aber lediglich im MPLS-Netz Gültigkeit. Wenn somit ein IP-Paket vom Internet-Netz IP in das MPLS-Netz eindringt, wird diesem der im MPLS-Netz gültige Kopfteil angehängt. Darin sind alle Verbindungsinformationen enthalten, die den Weg des MPLS-Paketes im MPLS-Netz vorgeben. Verläßt das MPLS-Paket das MPLS-Netz, wird der Kopfteil wieder entfernt und das IP-Paket im sich daran anschließenden Internet-Netz IP nach Maßgabe des IP-Protokolls weitergeroutet.

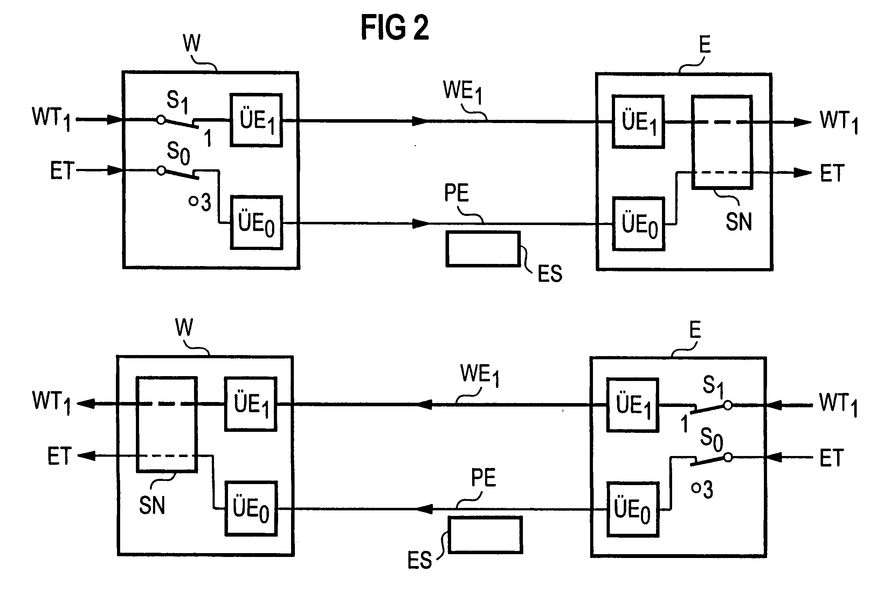

In Fig. 2 sind beispielshaft zwei Knoten eines MPLS-Netzes in einer linearen Konfiguration aufgezeigt, welche jeweils als Vermittlungseinrichtung W, E ausgebildet sind. Hierbei handelt es sich um eine 1:1 Struktur. In vorliegendem Ausführungsbeispiel wird davon ausgegangen, daß es sich bei den Vermittlungseinrichtungen um MPLS-Cross Connect Vermittlungseinrichtungen oder Label Switched Router handelt. Die Verwendung derart ausgebildeter Vermittlungseinrichtungen bedeutet jedoch keine Einschränkung der Erfindung, andere Vermittlungseinrichtungen wie z.B. ATM-Vermittlungseinrichtungen sind ebenso verwendbar. In Fig. 2 sollen nun MPLS-Pakete (Multiprotocol Label Switched Packets) von dem Label Switched Router W zu dem Label Switched Router E hin übertragen werden.

In Fig. 2 ist ein bidirektionaler Übertragungsfall dargestellt. Die Übertragung von MPLS-Paketen im MPLS-Netz ist jedoch unidirektional definiert. Demzufolge sind im bidirektionalen Übertragungsfall für die Hin - und Rückübertragung von einer Verbindung WT zugehörigen MPLS-Pakete zwischen dem Label Switched Router W und dem Label Switched Router E insgesamt 2 "Verbindungen" (eine für die Hinrichtung und eine für die Rückrichtung) aufzubauen. Eine "Verbindung" im MPLS-Netz wird als Label Switched Path (LSP) bezeichnet.

Die Label Switched Router W, E sind über Betriebsstrecken (WORKING ENTITY), die gemäß vorliegendem Ausführungsbeispiel als eine einzige Betriebsstrecke WE₁ ausgebildet sein sollen, sowie eine Ersatzstrecke PE (PROTECTION ENTITY) miteinander verbunden. Weiterhin sind Schalteinrichtungen S₀, S₁ (BRIDGE) aufgezeigt, über die die ankommenden MPLS-Pakete wahlweise über die Betriebsstrecke WE₁ oder die Ersatzstrecke PE zum Label Switched Router E hin übertragen werden.

Weiterhin sind Fig. 2 Selektionseinrichtungen SN entnehmbar, deren Aufgabe darin besteht, die über die Betriebsstrecke WE₁ übertragenen MPLS-Pakete dem Ausgang des Label Switched Routers E zuzuführen. Die Selektionseinrichtungen SN sind als Koppelfeld ausgebildet. Das Koppelfeld SN ist sowohl im Label Switched Router W als auch im Label Switched Router E enthalten.

Weiterhin sind in beiden Label Switched Router W, E Überwachungsvorrichtungen ÜE₀ ,ÜE₁ (PROTECTION DOMAIN SINK, PROTECTION DOMAIN SOURCE) aufgezeigt, die den Zustand bzw. die Qualität der über die Betriebstrecke WE₁ übertragenen MPLS-Pakete überwachen. Beispielsweise werden die MPLS-Pakete der Verbindung mit der Nummer 1 WT₁ bevor sie über die Betriebsstrecke WE₁ zum Label Switched Router E hin übertragen werden, in der Überwachungseinrichtung ÜE₁ des Label Switched Routers W mit Steuerinformation versehen, die die Überwachungseinrichtung ÜE₁ des empfangenden Label Switched Routers E entnimmt und überprüft. Anhand dieser Steuerinformation kann dann ermittelt werden, ob die Übertragung der MPLS-Pakete korrekt erfolgt ist oder nicht. Insbesondere kann hier ein Totalausfall (SIGNAL FAIL FOR WORKING ENTITY) der Betriebsstrecke WE₁ ermittelt werden. Ebenso sind aber auch unter Verwendung bekannter Verfahren Verschlechterungen in der Übertragungsqualität (SIGNAL DEGRADE) ermittelbar.

Die Überwachungsvorrichtung ÜE₁ schließen die Betriebsstrecke WE₁ auf beiden Seiten ab. Weitere Überwachungsvorrichtungen ÜE₀ sind auf beiden Enden der Ersatzstrecke PE angeordnet. Diese soll im Fehlerfall als Übertragungsstrecke für die außer Betrieb genommene Betriebsstrecke WE₁ dienen. Weiterhin werden hierüber Ersatzschalteprotokolle ES übertragen, womit die Intaktheit der Ersatzstrecke oberste Priorität hat.

In jedem der Label Switched Router W, E sind ferner in Fig. 2 nicht aufgezeigte zentrale Steuereinrichtungen angeordnet. Diese beinhalten jeweils lokale und globale Prioritätstabellen. Bei ersteren wird Zustand und Priorität des lokalen Label Switched Routers abgespeichert, während bei letzteren Zustand und Priorität sowohl des lokalen als auch des verbleibenden Label Switched Routers abgespeichert ist. Durch die Einführung der Prioritäten wird erreicht, daß beim gleichzeitigen Auftreten mehrerer Ersatzschalteanforderungen festgelegt ist, welche Strecke ersatzzuschalten ist. Ebenso sind in den Prioritätstabellen die Ersatzschalteanforderungen priorisiert. So besteht beispielsweise eine hochpriore Anforderung von einem Anwender. Da dieser Ersatzschalteanforderung eine hohe Priorität zugewiesen ist, wird sie somit bevorzugt gesteuert. Eine von der Betriebsstrecke WE₁ gesteuerte Ersatzschalteanforderung wird dann in diesem Fall zurückgewiesen.

Die zentralen Steuereinrichtungen der Label Switched Router W, E tauschen Informationen in einem Ersatzschalteprotokoll ES aus. Dieses Protokoll wird über die Ersatzstrecke PE übertragen und von der zugeordneten Überwachungseinrichtung ÜE₀ dem jeweils empfangenden Label Switched Router E entnommen, und der betreffenden zentralen Steuereinrichtung zugeführt. Weiterhin wird in der zentralen Steuervorrichtung dafür Sorge getragen, daß im Fehlerfall die Schaltvorrichtungen S₀, S₁ in entsprechender Weise gesteuert werden.

Im Protokoll ES sind Informationen bezüglich der momentanen Zustände der Schaltvorrichtungen abgelegt. Weiterhin sind noch weitere Informationen bezüglich der generierten Ersatzschalteanforderung gespeichert. Das Protokoll wird jeweils bei Generierung der Ersatzschalteanforderung zwischen den beiden Label Switched Router ausgetauscht. In einer speziellen Ausgestaltung der Erfindung wird vorgesehen, das Protokoll ES zusätzlich zyklisch zwischen beiden Label Switched Router zu übertragen.

Gemäß Fig. 2 werden die MPLS-Pakete im intakten Betriebsfall dem Label Switched Router E zugeführt. Die MPLS-Pakete sollen dabei der Verbindung WT₁ angehören. Die einzelnen Verbindungen werden anhand der im Paketkopf eingetragenen logischen MPLS-Verbindungsnummer unterschieden.

Die Schaltvorrichtungen S₀, S₁ des Label Switched Router W sind in diesem (noch intakten) Betriebsfall derart geschaltet, daß die MPLS-Pakete der Überwachungseinrichtung ÜE₁ unmittelbar zugeführt werden. Hier werden die MPLS-Pakete mit den bereits angesprochenen Steuerinformationen beaufschlagt und über die Betriebsstrecke WE₁ der Überwachungseinrichtungen ÜE₁ dem empfangenden Label Switched Router E zugeführt. Dort wird die mitgeführte Steuerinformation überprüft und gegebenenfalls ein Fehlerfall ermittelt. Ist die Übertragung korrekt erfolgt, werden die MPLS-Pakete dem Koppelfeld SN zugeführt. Hier wird die MPLS-Verbindungsinformation ausgewertet und nach Maßgabe dieser Auswertung das MPLS-Paket über dem in Frage kommenden Ausgang des Koppelfeldes SN in das MPLS-Netz weitergeleitet.

Die Ersatzstrecke PE kann während dieser Zeit ungenutzt bleiben. Gegebenenfalls können aber auch während dieser Zeit Sonderdaten (EXTRA TRAFFIC) der Vermittlungseinrichtung E zugeführt werden. Die Schaltvorrichtung S₀ der Vermittlungseinrichtung W nimmt also die Stellungen 1 oder 3 ein. Die Übertragung der Sonderdaten erfolgt ebenfalls in MPLS-Paketen. Die Überwachungseinrichtung ÜE₀ im Label Switched Router W beaufschlagt die MPLS-Pakete in gleicher Weise mit Steuerinformationen wie dies im Falle der über die Betriebsstrecke WE₁ bereits geschildert wurde. Ebenso erfolgt die Überwachung der Strecke. Als Sonderdaten können dabei Steuerdaten allgemeiner Art verwendet werden, die auch als spezielle Verkehrsdaten ausgebildet sein können.

Als Sonderdaten kann über die Ersatzstrecke auch niederpriorer Verkehr übertragen werden, der nur dann im Netz übertragen wird, wenn ausreichend Ressourcen vorhanden sind. Der niederpriore Verkehr wird dann in diesem Fall durch Ersatzschalten des hochprioren Verkehrs automatisch verdrängt. In diesem Fall erfolgt die Verdrängung der Sonderdaten im Ersatzschaltefall nicht durch Umschalten der Schaltvorrichtung Sₒ in Figur 2, sondern durch Priorisierung des hochprioren Verkehrs gegenüber den niederprioren Sonderdaten in jeder Übertragungseinrichtung.

Im folgenden wird nun davon ausgegangen, daß die Betriebsstrecke WE₁ ausgefallen ist. Dies wird von der dieser zugeordneten Überwachungseinrichtung ÜE₁ des empfangenden Label Switched Routers E ermittelt. Die Ersatzschalteanforderung wird nun zur betreffenden zentralen Steuereinrichtung übermittelt, und dort in der lokalen Prioritätstabelle sowie der globalen Prioritätstabelle abgelegt.

Nach Maßgabe der in der globalen Prioritätstabelle abgespeicherten Prioritäten wird nun ermittelt, ob noch höher priore Anforderungen anstehen.Dies könnte beispielsweise die bereits angesprochene Umschalteanforderung des Anwenders (FORCED SWITCH FOR WORKING ENTITY) sein. Sind keine höher priorisierten Anforderungen vorhanden, wird die Schaltvorrichtung S₁ des Label Switched Routers E in den verbleibenden Betriebszustand gesteuert, wie in Fig. 2 aufgezeigt. Im folgenden wird nun das Ersatzschalteprotokoll Es über die Ersatzstrecke PE dem Label Switched Router W zugeführt. In diesem Ersatzschalteprotokoll sind die bereits angesprochenen Informationen enthalten. Wesentlich ist, daß die lokale Prioritätslogik die Ausgestaltung der Information bezüglich der generierten Ersatzschalteanforderung definiert, und die globale Prioritätslogik die Stellung der Schaltvorrichtung S₀.

Von der Überwachungseinrichtung ÜE₀ des Label Switched Routers E wird nun das Ersatzschalteprotokoll ES übernommen und der zentralen Steuereinrichtung des Label Switched Router E zugeführt. Liegen auch hier in der globalen Prioritätstabelle keine weiteren höherpriorisierten Anforderungen an, so wird auch hier die Schaltvorrichtung S₁ in entsprechender Weise angesteuert und eingestellt. Weiterhin wird die Schaltvorrichtung S₀ des Label Switched Routers W ebenfalls umgelegt. Der neue Status der beiden Schaltvorrichtungen S₀, S₁ wird dem Label Switched Router E über das Ersatzschalteprotokoll ES quittiert, und in der dortigen globalen Prioritätstabelle aktualisiert. Die MPLS-Pakete der Verbindung WT₁ werden dann über die Ersatzstrecke PE dem Label Switched Router E zugeführt.

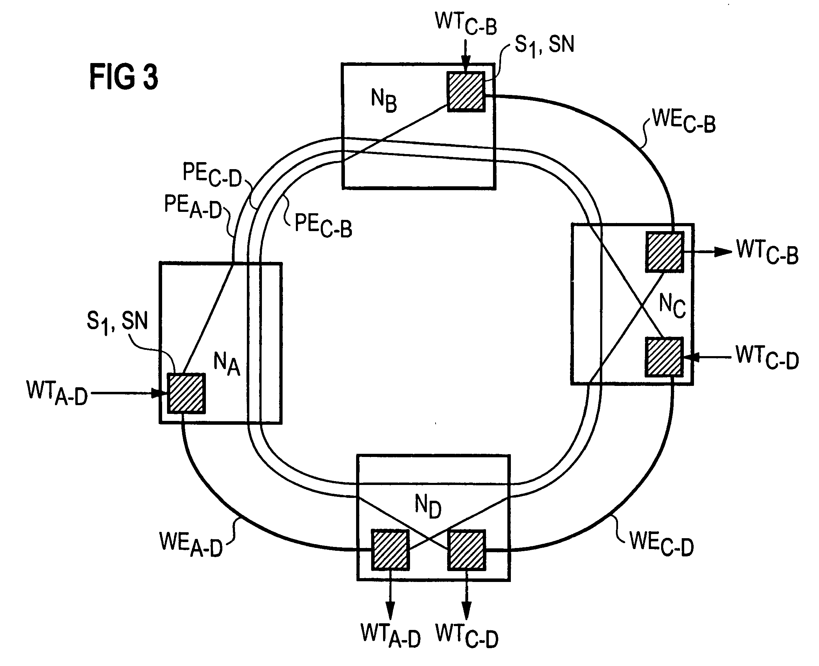

In Fig. 3 zeigt die erfindungsgemäße Ringkonfiguration. Die Vermittlungseinrichtungen sind dabei so geschaltet, daß sich ein geschlossener Ring ergibt. Gemäß vorliegendem Ausführungsbeispiel soll dabei dieser Ring aus linearen Verbindungsabschnitten aufgebaut sein, wie sie in Fig. 2 aufgezeigt sind (1:1-Struktur).

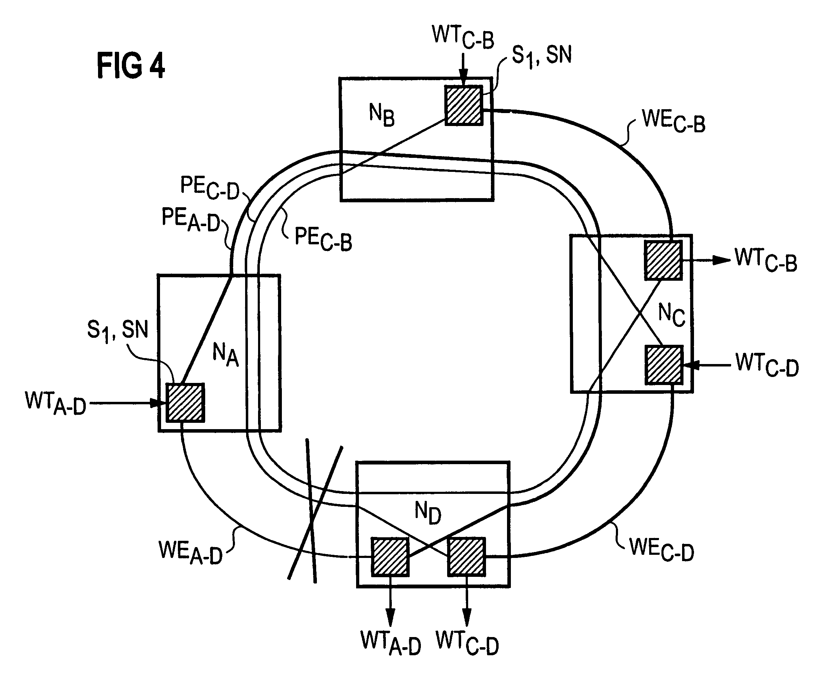

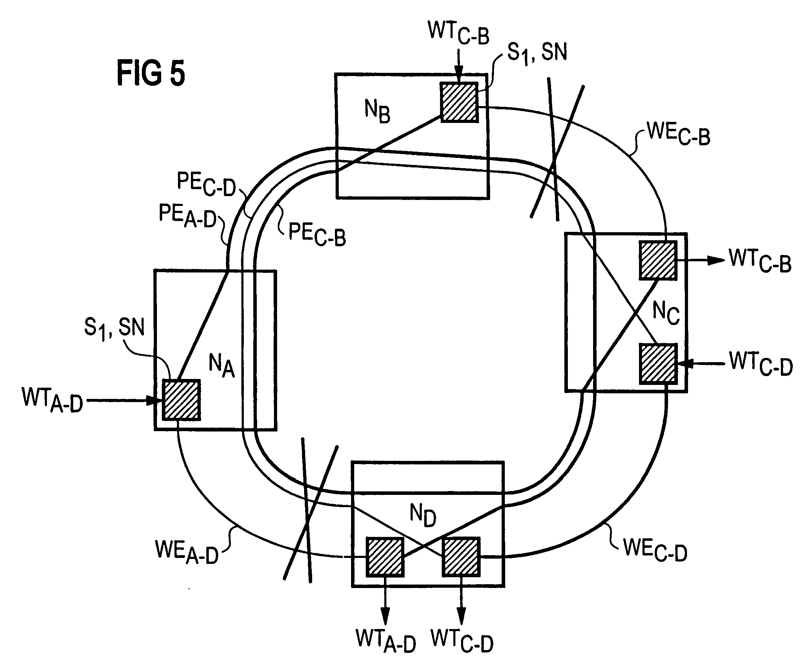

Demgemäß sind Fig. 3 eine Mehrzahl von Label Switched Routern entnehmbar. Dies sind die Label Switched Router N_{A}, N_{B}, N_{C} sowie N_{D}. Jeweils zwei dieser Label Switched Router schließen dabei Übertragungsabschnitte ab. Am Beispiel der Label Switched Router N_{A}, N_{D} sind dies die Betriebsstrecke WE_{A-D} sowie die Ersatzstrecke PE_{A-D}. In gleicher Weise schließen die beiden Label Switched Router N_{B}, N_{C} die Verbindungsabschnitte WE_{C-B}, PE_{C-B} ab. Bei letzterer handelt es sich bekanntermaßen um jeweils zugeordneten Ersatzstrecke. Gemäß Fig. 3 (sowie auch Fig. 4, Fig. 5) sind die Betriebsstrecken durch einen dickeren Strich hervorgehoben, während die Ersatzstrecken lediglich durch einen dünnen Strich gekennzeichnet sind.

Weiterhin sind allen Label Switched Routern Schalteinrichtungen S₁, SN entnehmbar, die mit den gemäß Fig. 2 aufgezeigten Schalteinrichtungen identisch sind. Zum einfacheren Verständnis wird hier auf eine detailliertere Offenbarung verzichtet. In allen Label Switched Routern sind - hier ebenfalls nicht näher aufgezeigte - zentrale Steuereinrichtungen mit lokalen und globalen Prioritätstabellen angeordnet. Die Funktionsweise wurde bereits im Falle der Verwendung einer linearen Anordnung gemäß Fig. 2 näher erläutert.

Es soll nun davon ausgegangen werden,daß eine Verbindung WT_{A-D} über den Ring zwischen zwei Teilnehmerendeinrichtungen geführt werden soll. Dabei werden die dieser Verbindung zugehörigen MPLS-Pakete dem Label Switched Router N_{A} zugeführt und über die jeweils aktive Betriebsstrecke WE_{A-D} zum Label Switched Router N_{D} geleitet, wo die der Verbindung WT_{A-D} zugehörigen MPLS-Pakete den Ring wieder verlassen.

In Fig. 3 ist durch die Vorgabe eines Pfeiles die Richtung angezeigt, mit der diese MPLS-Pakete in den Ring eindringen und wieder verlassen. Da es sich jedoch bei dieser Verbindung um eine bidirektionale Verbindung handelt, werden die zur betreffenden Rückrichtung gehörenden MPLS-Pakete über dieselben Verbindungsabschnitte geleitet. Dies bedeutet, daß die zu der Rückrichtung angehörenden MPLS-Pakete über den Label Switched Router N_{D} in den Ring eindringen, über die Verbindung WE_{A-D} zum Label Switched Router N_{A} geführt werden und dort den Ring wieder verlassen. Zur besseren Übersichtlichkeit wird jedoch im folgenden lediglich eine Richtung aufgezeigt. Als weitere Ausgestaltung der Erfindung wird vorgesehen, diese Konfiguration als unidirektionalen Übertragungsfall auszubilden. Dies ist ohne weiteres möglich, da die Übertragung von MPLS-Paketen im Gegensatz zur Übertragung von ATM-Zellen unidirektional definiert ist. Allerdings wird auch für diesen unidirektionalen Übertragungsfall eine Rückrichtung und ein Ersatzchalteprotokoll benötigt, weil bei der hier zutreffenden 1:1 Architektur der Ersatzschaltevorgang immer zwischen Sende- und Empfangsseite koordiniert werden muß.

Gleiches gilt für die gemäß Fig. 3 aufgezeigten weiteren Verbindungen WT_{C-B} sowie WT_{C-D}. Die den hier aufgezeigten 3 Verbindungen WT_{A-D}, WT_{C-B} sowie WT_{C-D} zugehörigen MPLS-Pakete werden über die jeweils aktiven Betriebsstrecken WE_{A-D}, WE_{C-B} sowie WE_{C-D} übertragen. Die hierzu gehörigen Ersatzstrecken PE_{A-D}, PE_{C-B} sowie PE_{C-D} bleiben zunächst unberührt.

Fig. 4 zeigt nun, wie eine Störung auf dem Ring zu behandeln ist. Dies soll am Beispiel der Verbindung WT_{A-D} erfolgen. Es wird somit davon ausgegangen, daß der Übertragungsabschnitt zwischen den Label Switched Routern N_{A} sowie N_{D} durch eine Störung beeinflußt wird. Es wird weiter davon ausgegangen, daß dies zunächst die einzige Störung im Ring sein soll. Durch Austausch des Ersatzschalteprotokolles ES über die Ersatzstrecke PE_{A-D} wird dem Label Switched Router N_{A} die Störung mitgeteilt. Nach Maßgabe der Auswertung der lokalen sowie globalen Prioritäten wird nun die Schalteinrichtung S₁ des Label Switched Routers N_{A} in den verbleibenden Betriebszustand gesteuert. Die der Verbindung WE_{A-D} zugehörigen MPLS-Pakete werden nun im folgenden über diese Ersatzstrecke PE_{A-D} und über die Label Switched Router N_{B} und N_{C} dem Label Switched Router N_{D} zugeführt, wo sie den Ring verlassen.

Erfindungsgemäß wird nun für zwischen zwei Label Switched Routern gelegene Verbindungsabschnitte eine gemeinsame Übertragungskapazität für den gemeinsam genutzten Ersatzweg reserviert. Dies ist möglich, da davon ausgegangen wird, daß lediglich ein Verbindungsabschnitt des Ringes störungsbehaftet ist. Beispielsweise könnte den Verbindungen WT_{A-D}, WT_{C-B} sowie WT_{C-D} jeweils 140 Mbit/sec zugewiesen werden. Für den zwischen Label Switched Routern N_{A}, N_{B} gelegenen Verbindungsabschnitt würden somit für alle 3 Ersatzstrecken 140 MBit/sec zugewiesen werden. Dies bedeutet, daß im Ersatzschaltefall lediglich einer Betriebsstrecke auf der zugeordneten Ersatzstrecke 140 Mbit/s zur Verfügung stehen. Für die zwischen den Label Switched Routern N_{B}, N_{C} gelegenen Verbindungsabschnitte gelten ähnliche Überlegungen. Hier wären in gleicher Weise 140 MBit/s zu reservieren, wobei im Ersatzschaltefall lediglich einer Betriebsstrecke auf der zugeordneten Ersatzstrecke ebefalls eine Übertragungskapazität von 140 Mbit/s in vollem Umfang zur Verfügung stehen.

Eine derartige Vorgehensweise hat insbesondere den Vorteil, daß pro Verbindung weniger Gebühren an Übertragungskapazität angemeldet werden müssen ("Shared Protection"). Im Falle einer "Dedicated Protection" wäre dies anders. Am günstigsten ist der Einspareffekt in dem Falle, wo eine Verbindung zwischen zwei benachbarten Label Switched Routern erstellt wird. Dies ist beispielsweise für die Verbindung WT_{A-D} zwischen den Label Switched Routern N_{A}, N_{D} der Fall. Der Einspareffekt ist hier deshalb am größten, weil die zugehörigen Ersatzstrecken über die beiden weiteren Label Switched Router N_{B}, N_{C} zum Label Switched Router N_{D} geführt werden müssen. Gleiches gilt für die weiteren aufgezeigten Verbindungen WT_{C-D} sowie WT_{C-D}.

Falls der Label Switched Router N_{A} als Vermittlungsebene einer höheren Hierarchieebene (wie z. B. ein Core Netz) ausgebildet ist, wäre der Einspareffekt gegenüber einer "Dedicated Protection" Konfiguration am geringsten. In diesem Fall müßte jeder Verkehr der übrigen Label Switched Router über diese höher gelegene Label Switched Router N_{A} geführt werden. Ein mittlerer Einspareffekt ergäbe sich in dem Falle, daß jede der Label Switched Router im Sinne einer kompletten Vermaschung mit jedem Label Switched Router kommunizieren würde.

Sonderdaten allgemeiner Art, wie sie im Zusammenhang gemäß Fig. 2 erläutert, können nicht über den Ring übertragen werden. Dies sind insbesondere die dort angesprochenen Steuerdaten. Erfindungsgemäß können jedoch die als Sonderdaten ausgebildeten speziellen Verkehrsdaten aufgrund der ihnen zugewiesenen eigenen Priorität übertragen werden.

Abschließend sei gemäß Fig. 5 beispielhaft ein weiterer Störungsfall aufgezeigt. Hier soll neben einer einfach ausgebildeten Störung, wie sie in Fig. 4 aufgezeigt ist, noch zusätzlich ein Störungsfall auf der Verbindungsstrecke WE_{C-B} erfolgen. In diesem Fall werden weitere Ersatzschalteprotokolle ausgetauscht. Hier ist dann jedoch sowohl die Betriebsstrecke als auch die Ersatzstrecke störungsbehaftet. Aufgrund der gemeinsamen Reservierung von Übertragungskapazität für Ersatzstrecken würden bei Ersatzschaltung beider betroffener Betriebsstrecken auf die jeweilige Ersatzstrecke somit auch Verbindungen betroffen, die von der Störung nicht beeinflußt werden. Dies sind in vorliegendem Fall die Verbindungen WT_{C-D}. Da ein Umschalten in diesem Fall keinen Vorteil bringen würde, da auch die Ersatzstrecke fehlerbehaftet ist, wird somit im Falle des Auftretens von Doppelfehlern auf ein Umschalten verzichtet.

## Patentansprüche

1. Verfahren zum Ersatzschalten von Übertragungseinrichtungen, mit
wenigstens zwei Vermittlungseinrichtungen (N_{A}, N_{D}), die jeweils einen aus Betriebsstrecken (WE_{A-D}, WE_{D-A}) und/oder Ersatzstrecken (PE_{A-D}, PE_{D-A}) gebildeten Übertragungsabschnitt abschließen, und zwischen denen Informationen über diesen Übertragungsabschnitt ausgetauscht werden, wobei im Falle einer Störung auf dem betreffenden Übertragungsabschnitt die hierüber bislang übertragen Informationen nach Maßgabe von Prioritätskriterien und logischen Verbindungsinformationen gegebenenfalls auf die Ersatzstrecke umgeleitet werden,
**dadurch gekennzeichnet,**
**daß** die Informationen in MPLS-Pakete eingefügt sind,
**daß** zwei gegenläufige unidirektionale MPLS-Verbindungen logisch miteinander assoziiert sind, wobei die beiden gegenläufigen MPLS-Verbindungen jeweils die gleichen Vermittlungseinrichtungen verbinden,
**daß** mehrere lineare Übertragungsabschnitte derart zusammengefügt sind, daß ein Ringleitungssystem gebildet ist, wobei Betriebsstrecke und Ersatzstrecke über unterschiedliche physikalische Wege geführt sind, und
**daß** eine Mehrzahl von Ersatzstrecken (PE_{A-D}, PE_{C-B}, PE_{C-D}) sich eine gemeinsam reservierte Übertragungskapazität teilen.

2. Verfahren nach Anspruch 1,
**dadurch gekennzeichnet,**
**daß** ein unidirektionales Ringleitungssystem durch Verwenden von unidirektionalen Vermittlungseinrichtungen gebildet ist, wobei allerdings die logische Assoziation der beiden gegenläufigen, undirektionaler MPLS-Verbindungen weiterhin beibehalten wird.

3. Verfahren nach Anspruch 1 oder 2,
**dadurch gekennzeichnet,**
**daß** im Ersatzschaltefall eine Ersatzschalteanforderung generiert wird, der weitere Prioritäten zugewiesen sind.

4. Verfahren nach Anspruch 1, bis 3,
**dadurch gekennzeichnet,**
**daß** die logische Verbindungsinformation die MPLS-Verbindungsnummer (Label Value) ist.

5. Verfahren nach Anspruch 1 bis 4,
**dadurch gekennzeichnet,**
**daß** lokale und globale Prioritätstabellen vorgesehen werden, in der die Rangfolge der Prioritäten festgelegt ist.

6. Verfahren nach einem der vorstehenden Ansprüche,
**dadurch gekennzeichnet,**
**daß** bei Eintreffen einer Ersatzschalteanforderung in der empfangenden Vermittlungseinrichtung ein Ersatzschalteprotokoll generiert wird, das lediglich einmal über die Ersatzstrecke (PE) der sendenden Vermittlungseinrichtung zugeführt wird.

7. Verfahren nach einem der vorstehenden Ansprüche,
**dadurch gekennzeichnet,**
**daß** Totalaufall und Verschlechterung einer Betriebsstrecke in der Überwachungseinrichtung der empfangenden Vermittlungseinrichtung ermittelt werden.

8. Verfahren nach einem der vorstehenden Ansprüche,
**dadurch gekennzeichnet,**
**daß** die Vermittlungseinrichtungen als MPLS-Crossconnect-Schalteinrichtungen ausgebildet sind.

9. Verfahren nach einem der vorstehenden Ansprüche,
**dadurch gekennzeichnet,**
**daß** die Ersatzschaltung gegebenenfalls durch Ansteuern einer in der sendenden Vermittlungseinrichtung enthaltenden Schaltvorrichtung (S₁) sowie unter Verwendung einer in der empfanempfangenden Vermittlungseinrichtung angeordneten Selektionseinrichtung (SN) erfolgt.

10. Verfahren nach einem der vorstehenden Ansprüche,
**dadurch gekennzeichnet,**
**daß** über die Ersatzstrecke (PE) in betriebsstörungsfreien Zeiten gegebenenfalls Sonderdaten übertragen werden.

11. Verfahren nach einem der vorstehenden Ansprüche,
**dadurch gekennzeichnet,**
**daß** die Sonderdaten als niederpriorer Verkehr ausgebildet sind, der im Falle eines Ersatzschaltens des hochprioren Verkehrs automatisch von diesem verdrängt werden.

12. Verfahren nach einem der vorstehenden Ansprüche,
**dadurch gekennzeichnet,**
**daß** die Selektionseinrichtung (SN) als Koppelfeld und/ oder als einfaches Schaltelement ausgebildet ist.

13. Verfahren nach einem der vorstehenden Ansprüche,
**dadurch gekennzeichnet,**
**daß** das Ersatzschalteprotokoll zyklisch zwischen der sendenden Vermittlungseinrichtung sowie der empfangenden Vermittlungseinrichtung ausgetauscht wird.

14. Verfahren nach einem der vorstehenden Ansprüche,
**dadurch gekennzeichnet,**
**daß** eine Gruppenersatzschaltung vorgesehen ist, indem alle über denselben physikalischen Pfad geführten MPLS-Verbindungen logisch zu einer Gruppe zusammengefaßt werden, und für die derart geformte Gruppe wenigstens zwei Ersatzschalteverbindungen erstellt werden, wobei jeweils eine dieser Ersatzschalteverbindungen über eine Betriebsstrecke (WE) und eine weitere dieser Ersatzschalteverbindungen über die Ersatzstrecke (PE) eingerichtet wird.

15. Verfahren nach einem der vorstehenden Ansprüche,
**dadurch gekennzeichnet,**
**daß** im Falle des Vorsehens einer Gruppenersatzschaltung von den Überwachungseinrichtungen (ÜE₀...ÜEₙ) lediglich die wenigstens zwei Ersatzschalteverbindungen überwacht werden.

16. Verfahren nach einem der vorstehenden Ansprüche,
**dadurch gekennzeichnet,**
**daß** das Einrichten der über die wenigstens eine Betriebsstrecke (WE₁) geführten Verbindungen sowie der über die Ersatzstrecke (PE) geführten Verbindungen durch ein MPLS Signalisierungsprotokoll erfolgt, das auch Bandbreite in den Übertragungseinrichtungen reserviert und den Weg der Betriebsstrecke (WE₁) und der Ersatzstrecke (PE) festlegt.

## Claims

1. Method for providing an equivalent circuit for transmission devices, comprising
at least two switching devices (N_{A}, N_{D}), which in each case terminate a transmission section formed from operating links (WE_{A-D}, WE_{D-A}) and/or alternate links (PE_{A-D}, PE_{D-A}), and between which devices information is exchanged via this transmission section, wherein, in the event of a fault on the relevant transmission section, the information transmitted via this section until now is diverted, if necessary, to the alternate link in accordance with priority criteria and logical connection information,
**characterised in that**,
the information is inserted into MPLS packets,
**in that** two oppositely directed unidirectional MPLS connections are logically associated with each other, wherein the two oppositely directed MPLS connections each connect the same switching devices,
**in that** several linear transmission sections are joined together in such a way that a ring line system is formed, wherein operating link and alternate link are routed via different physical paths, and
**in that** a plurality of alternate links (PE_{A-D}, PE_{C-B}/ PE_{C-D}) share a jointly reserved transmission capacity.

2. Method according to claim 1,
**characterised in that**,
a unidirectional ring line system is formed by using unidirectional switching devices, but the logical association of the two oppositely directed unidirectional MPLS connections is still retained.

3. Method according to claim 1 or 2,
**characterised in that**,
in the alternate switching case, an alternate switching request is generated to which further priorities are assigned.

4. Method according to claim 1 to 3,
**characterised in that**,
the logical connection information is the MPLS connection number (Label Value).

5. Method according to claim 1 to 4,
**characterised in that**,
local and global priority tables are provided in which the order of rank of the priorities is specified.

6. Method according to one of the preceding claims,
**characterised in that**,
when an alternate switching request arrives in the receiving switching device, an alternate switching protocol is generated which is supplied only once to the transmitting switching device via the alternate link (PE).

7. Method according to one of the preceding claims,
**characterised in that**,
a total failure and degradation of an operating link are detected in the monitoring device of the receiving switching device.

8. Method according to one of the preceding claims,
**characterised in that**,
the switching devices are constructed as MPLS cross-connect switching devices.

9. Method according to one of the preceding claims,
**characterised in that**,
the alternate switching, if necessary, is effected by activating a switching device (S₁) contained in the transmitting switching device and by using a selection device (SN) arranged in the receiving switching device.

10. Method according to one of the preceding claims,
**characterised in that**,
as the occasion arises, special data is transmitted via the alternate link (PE) at times where there are no operating disturbances.

11. Method according to one of the preceding claims,
**characterised in that**,
the special data is constructed as low-priority traffic which in the case of alternate switching of the high-priority traffic is automatically displaced by said high-priority traffic.

12. Method according to one of the preceding claims,
**characterised in that**,
the selection device (SN) is constructed as a switching network and/or as a simple switching element.

13. Method according to one of the preceding claims,
**characterised in that**,
the alternate switching protocol is exchanged cyclically between the transmitting switching device and the receiving switching device.

14. Method according to one of the preceding claims,
**characterised in that**,
provision is made for group alternate switching **in that** all MPLS connections conducted via the same physical path are logically combined to form a group, and for the group formed in this manner at least two alternate switching connections are generated, wherein, respectively one of these alternate switching connections is set up via an operating link (WE) and another one of these alternate switching connections is set up via the alternate link (PE).

15. Method according to one of the preceding claims,
**characterised in that**,
where group alternate switching is provided, the monitoring devices (ÜE₀...ÜEₙ) only monitor the at least two alternate switching connections.

16. Method according to one of the preceding claims,
**characterised in that**,
the connections routed via the at least one operating link (WE₁) and the connections routed via the alternate link (PE) are set up using an MPLS signalling protocol, said MPLS signalling protocol also reserving bandwidth in the transmission devices and specifying the path of the operating link (WE₁) and of the alternate link (PE).

## Revendications

1. Procédé pour la commutation de remplacement de dispositifs de transmission, comprenant au moins deux dispositifs de raccordement (N_{A}, N_{D}) qui terminent chacun un tronçon de transmission formé de tronçons d'exploitation (WE_{A-D}, WE_{D-A}) et/ou de tronçons de remplacement (PE_{A-D}, PE_{D-A}), et entre lesquels des informations sur ce tronçon de transmission sont échangées, dans le cas d'un incident sur le tronçon de transmission concerné, les informations transmises jusqu'à présent par celui-ci étant déviées en fonction des critères de priorité et d'informations de liaison logiques éventuellement sur le tronçon de remplacement,
**caractérisé en ce que**
les informations sont insérées dans des paquets MPLS,
**en ce que** deux liaisons MPLS unidirectionnelles opposées sont associées de façon logique entre elles, les deux liaisons MPLS opposées reliant à chaque fois les mêmes dispositifs de raccordement,
**en ce que** plusieurs tronçons de transmission linéaires sont assemblés de telle sorte qu'un système de ligne en boucle est formé, le tronçon d'exploitation et le tronçon de remplacement étant menés par différents chemins physiques, et
**en ce qu'**une pluralité de tronçons de remplacement (PE_{A-D}, PE_{C-B}, PE_{C-D}) se partagent une capacité de transmission réservée en commun.

2. Procédé selon la revendication 1,
**caractérisé en ce que**
un système de ligne en boucle unidirectionnel est formé par l'utilisation de dispositifs de raccordement unidirectionnels, l'association logique des deux liaisons MPLS unidirectionnelles et opposées étant cependant encore conservée.

3. Procédé selon la revendication 1 ou 2,
**caractérisé en ce que**
une demande de commutation de remplacement, à laquelle sont attribuées d'autres priorités, est générée dans le cas de commutation de remplacement.

4. Procédé selon les revendications 1 à 3,
**caractérisé en ce que**
l'information de liaison logique est le numéro de liaison MPLS (Label Value).

5. Procédé selon les revendications 1 à 4,
**caractérisé en ce que**
des tableaux de priorité locaux et globaux sont prévus, dans lesquels est fixé l'ordre de succession des priorités.

6. Procédé selon l'une quelconque des revendications précédentes,
**caractérisé en ce que**,
en cas d'arrivée d'une demande de commutation de remplacement, on génère dans le dispositif de raccordement récepteur un protocole de commutation de remplacement qui est amené uniquement une fois par le tronçon de remplacement (PE) au dispositif de raccordement émetteur.

7. Procédé selon l'une quelconque des revendications précédentes,
**caractérisé en ce que**
défaillance totale et dégradation d'un tronçon d'exploitation sont déterminées dans le dispositif de surveillance du dispositif de raccordement récepteur.

8. Procédé selon l'une quelconque des revendications précédentes,
**caractérisé en ce que**
les dispositifs de raccordement sont conçus comme des dispositifs de commutation MPLS-Crossconnect.

9. Procédé selon l'une quelconque des revendications précédentes,
**caractérisé en ce que**
la commutation de remplacement s'effectue éventuellement par l'activation d'un dispositif de commutation (S₁) inclus dans le dispositif de raccordement émetteur et en utilisant un dispositif de sélection (SN) disposé dans le dispositif de raccordement récepteur.

10. Procédé selon l'une quelconque des revendications précédentes,
**caractérisé en ce que**
éventuellement des données spéciales sont transmises par le tronçon de remplacement (PE) dans des périodes sans incident d'exploitation.

11. Procédé selon l'une quelconque des revendications précédentes,
**caractérisé en ce que**
les données spéciales sont conçues comme un trafic à faible priorité, qui, dans le cas d'une commutation de remplacement du trafic à haute priorité, est refoulé automatiquement par celui-ci.

12. Procédé selon l'une quelconque des revendications précédentes,
**caractérisé en ce que**
le dispositif de sélection (SN) est conçu comme champ de couplage et/ou comme simple élément de commutation.

13. Procédé selon l'une quelconque des revendications précédentes,
**caractérisé en ce que**
le protocole de commutation de remplacement est échangé de façon cyclique entre le dispositif de raccordement émetteur et le dispositif de raccordement récepteur.

14. Procédé selon l'une quelconque des revendications précédentes,
**caractérisé en ce que**
une commutation de remplacement de groupe est prévue par le fait que toutes les liaisons MPLS menées par le même chemin physique sont regroupées logiquement en un groupe et au moins deux liaisons de commutation de remplacement sont établies pour le groupe ainsi formé, à chaque fois l'une de ces liaisons de commutation de remplacement étant mise en place par un tronçon d'exploitation (WE) et une autre de ces liaisons de commutation de remplacement par le tronçon de remplacement (PE).

15. Procédé selon l'une quelconque des revendications précédentes,
**caractérisé en ce que**,
dans le cas où une commutation de remplacement de groupe est prévue par les dispositifs de surveillance (ÜE₀...ÜEₙ), seules les au moins deux liaisons de commutation de remplacement sont surveillées.

16. Procédé selon l'une quelconque des revendications précédentes,
**caractérisé en ce que**
la mise en place des liaisons menées par l'au moins un tronçon d'exploitation (WE₁) et des liaisons menées par le tronçon de remplacement (PE) s'effectue par un protocole de signalisation MPLS, qui réserve également de la largeur de bande dans les dispositifs de transmission et définit le chemin du tronçon d'exploitation (WE₁) et du tronçon de remplacement (PE).
